# EUROPÄISCHE PATENTSCHRIFT

(11) **EP 1 301 263 B1**
(45) Veröffentlichungstag und Bekanntmachung des Hinweises auf die Patenterteilung: **07.07.2004**
(21) Anmeldenummer: 01938134.2
(22) Anmeldetag: 28.04.2001
(51) Int. Cl.: B01D 53/26

(54) **WARMREGENERIERTER ADSORPTIONSTROCKNER FÜR GASFÖRMIGE MEDIEN**
HEAT-REGENERATED ADSORPTION DRYER FOR GASEOUS MEDIA
DESSICCATEUR A ADSORPTION REGENERE A CHAUD DESTINE A DES MILIEUX GAZEUX

(30) Priorität: 19.07.2000 DE 10034992
(43) Veröffentlichungstag der Anmeldung: 16.04.2003
(73) Patentinhaber: Zander Aufbereitungstechnik GmbH & Co.KG, 45219 Essen (DE)
(72) Erfinder: PRIESS, Günter, 47807 Krefeld (DE)
(74) Vertreter: Knauf, Rudolf, Dipl.-Ing.
(86) Internationale Anmeldenummer: PCT/EP2001/004802
(87) Internationale Veröffentlichungsnummer: WO 2002/005931

(56) Entgegenhaltungen:
- EP-A- 0 398 139
- EP-A- 0 884 091

## Beschreibung

Die Erfindung betrifft einen warmregenerierten Adsorptionstrockner für gasförmige Medien mit einer oder mehreren parallel liegenden Adsorptionskammern, die von Adsorption auf Regeneration und umgekehrt mittels einer Ventilkombination umschaltbar sind, sowie mit einem Gebläse, das der bzw. den Adsorptionskammern (n) in einem ersten Abschnitt der Regenerationsphase ein frisches, in einem ein- und ausschaltbaren Erhitzer erwärmtes, gasförmiges Medium und in einem zweiten Abschnitt der Regenerationsphase ein frisches kühles gasförmiges Medium zuführt.

Regenerationstrockner dieser und ähnlicher Art sind bekannt (DE 197 20 104 A1).

Der Erfindung liegt die Aufgabe zugrunde, einen Adsorptionstrockner zu schaffen, bei dem die Energiebilanz für die Regeneration des Adsorptionsmittels bei verhältnismäßig geringem gerätetechnischen Aufwand günstig ist.

Diese Aufgabe wird bei einem warmregenerierten Adsorptionstrockner der eingangs genannten Art dadurch gelöst, daß an dem Einlaß der Adsorptionskammer, die in der Adsorptionsphase als Einlaß für das zu trocknende Medium dient, das Gebläse mit seiner Druckseite über den Erhitzer und ein absperrbarer Saugeinlaß für das frische gasförmige Medium angeschlossen sind und daß der Auslaß des Adsorptionstrockners an einer absperrbaren Ausblasöffnung und der Saugseite des Gebläses angeschlossen ist, an der ferner ein weiterer absperrbarer Saugeinlaß für das frische gasförmige Medium angeschlossen ist.

Der erfindungsgemäße Adsorptionstrockner kann in der gesamten Regenerationsphase im Gleichlauf zur Adsorptionsphase betrieben werden. Bei der Regeneration im ersten Abschnitt mit dem erwärmten Medium wird neben der Heizenergie des Erhitzers die Verdichtungsenergie für die Erwärmung des frischen, angesaugten Mediums ausgenutzt. Das bedeutet kürzere Heizzeiten und eine Energieeinsparung im Vergleich zu den bekannten Adsorbern. Im zweiten Abschnitt der Regeneration werden die Vorteile der Vakuumregeneration genutzt. Mit der Ventilsteuerung ist es auch möglich, die Regeneration teilweise oder sogar ganz im geschlossenen Kreislauf durchzuführen.

Im folgenden wird die Erfindung anhand einer ein Ausführungsbeispiel darstellenden Zeichnung näher erläutert.

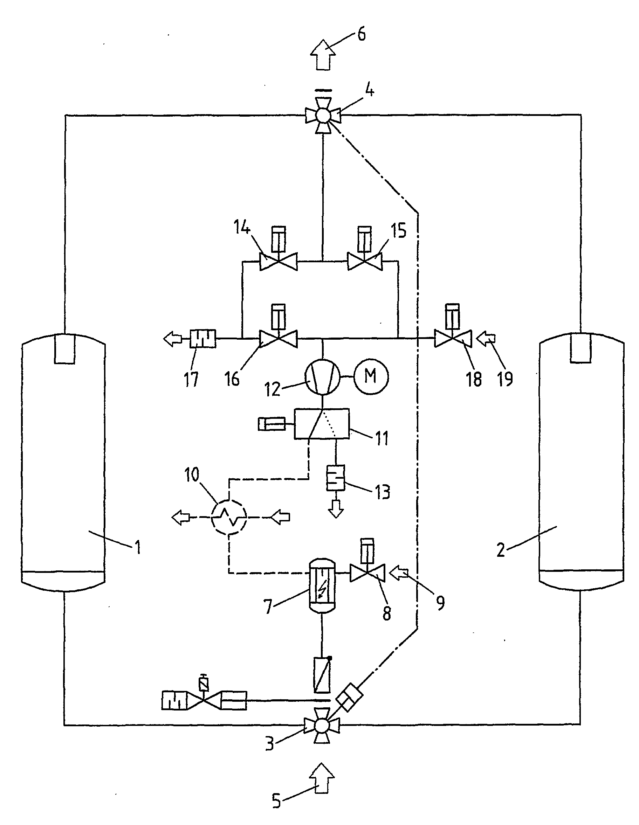

Der Adsorptionstrockner weist zwei im Wechselbetrieb "Adsorption/Regeneration" betriebene Adsorptionskammern 1,2 auf, deren Ein- und Auslässe über zwei Vierwegeventile 3,4 mit einem Einlaß für zu trocknende gasförmige Medien 5 und einem Auslaß für die getrockneten Medien 6 sowie über einen ein- und ausschaltbaren Erhitzer 7 an einem absperrbaren Saugeinlaß 8 für frische gasförmige Medien 9 und über einen fakultativ vorgesehenen und deshalb in der Zeichnung gestrichelt dargestellten Durchlaufkühler 10 und ein Umschaltventil 11 mit der Druckseite eines Gebläses 12 verbunden sind. Die Druckseite des Gebläses 12 ist außerdem über das Umschaltventil 11 mit einer Ausblasöffnung 13 verbunden. Ferner sind die Auslässe der Adsorptionskammern 1,2 über absperrbare Ventile 14,15,16 mit der Saugseite des Gebläses 12 und einer Ausblasöffnung 17 verbunden. Schließlich ist die Saugseite des Gebläses 12 mit einem absperrbaren weiteren Saugeinlaß 18 für ein frisches gasförmiges Medium 19 verbunden.

Die Regeneration des Adsorptionstrockners erfolgt auf folgende Art und Weise:

Es sei angenommen, daß die Adsorptionskammer 2 sich in der Adsorptionsphase und die Adsorptionskammer 1 in der Regenerationsphase befindet. Das zu entfeuchtende gasförmige Medium 5 gelangt über das Vierwegeventil 3 in die Adsorptionskammer 2 und nach Entfeuchtung über das Vierwegeventil 4 als trockenes Medium 6 zur Verbrauchsstelle. Im ersten Abschnitt der Regenerationsphase saugt das Gebläse 12 über den geöffneten Saugeinlaß 18 frisches gasförmiges Medium 19 an. Das Medium wird über das Umschaltventil 11, den nicht aktiven Durchlaufkühler 10, den eingeschalteten Erhitzer 7 und das Vierwegeventil 3 der Adsorptionskammer 1 erwärmt und unter Druck zugeführt. In diesem ersten Abschnitt der Regenerationsphase sind der Saugeinlaß 8 und die Ventile 15,16 geschlossen und das Ventil 14 geöffnet. Das erhitzte gasförmige Medium wird deshalb nach Passieren der Adsorptionskammer 1 und Aufnahme von Feuchtigkeit über die Ausblasöffnung 17 in die Atmosphäre geblasen. Grundsätzlich ist es möglich, nicht das gesamte Volumen des gasförmigen Mediums auszublasen, sondern einen Teil, wenn das Ventil 15 zumindest teilweise geöffnet ist. Das kann für die Energiebilanz insofern vorteihaft sein, als das erwärmte Medium wegen des Kreislaufbetriebes besser für die Regeneration ausgenutzt wird und nicht das gesamte Volumen des für die Regeneration verwendeten Medium auf Betriebstemperatur gebracht werden muß.

Sobald das Adsorptionsmittel in der Adsorptionskammer 1 getrocknet ist, wird der zweite Abschnitt der Regeneration eingeleitet, indem das Adsorptionsmittel gekühlt wird. Für den zweiten Abschnitt der Regenerationsphase werden der Saugeinlaß 8 für anzusaugende frische Medien 9 und das Ventil 15 geöffnet, die Ventile 14,16 geschlossen und das Umschaltventil 11 auf die Ausblasöffnung 13 umgeschaltet. Bei dieser Stellung der Ventile wird über den Saugeinlaß 8, den abgeschalteten Lufterhitzer 7 und das Vierwegeventil 3 das gasförmige Medium für das Kühlen vom Gebläse 12 angesaugt und der Adsorptionskammer 1 und weiter über das Vierwegeventil 4, das Ventil 15 und das Umschaltventil 11 der Ausblasöffnung 13 zugeführt. In diesem zweiten Abschnitt erfolgt also im Gegensatz zum ersten Abschnitt die Regeneration unter Vakuum.

Auch in diesem zweiten Abschnitt der Regeneration ist es möglich, das kühlende Medium zumindest teilweise im Kreislauf und bei Unterdruck zu führen. In diesem Fall ist es zweckmäßig, wenn dann im Kreislauf der Durchlaufkühler 10 eingeschaltet ist. Das Umschaltventil 11 ist dann auf Teilung geschaltet, so daß ein Teilstrom der Ausblasöffnung 13 und der andere Teilstrom dem Durchlaufkühler 10 zugeführt wird. Für einen vollständig geschlossenen Kreislauf ist das Umschaltventil 11 auf Durchlaß nur zu dem eingeschalteten Durchlaufkühler 10 geschaltet, so daß das Adsorptionsmittel sehr schnell abgekühlt wird, ohne es gleichzeitig mit Feuchtigkeit des kühlenden Mediums zu belasten.

In allen Betriebsabschnitten der Regeneration werden somit die Adsorptionskammern 1,2 im Gleichstrom zum Adsorptionsbetrieb betrieben, wobei die spezifischen Vorteile des Überdruckes mit erwärmtem Medium in dem ersten Abschnitt der Regeneration und von Unterdruck im zweiten Abschnitt genutzt werden.

## Patentansprüche

1. Warmregenerierter Adsorptionstrockner für gasförmige Medien mit einer oder mehreren parallel liegenden Adsorptionskammern (1,2), die von Adsorption auf Regeneration und umgekehrt mittels einer Ventilkombination (3,4) umschaltbar sind, sowie mit einem Gebläse (12), das der bzw. den Adsorptionskammern (1,2) in einem ersten Abschnitt der Regenerationsphase ein frisches, in einem ein- und ausschaltbaren Erhitzer (7) erwärmtes, gasförmiges Medium (19) zuführt,
**dadurch gekennzeichnet, daß** an dem Einlaß der Adsorptionskammer (1,2), der in der Adsorptionsphase als Einlaß für das zu trocknende Medium (5) dient, das Gebläse (12) mit seiner Druckseite über den Erhitzer (7) und ein absperrbarer Saugeinlaß (8) für das frische gasförmige Medium (9) angeschlossen sind und daß der Auslaß des Adsorptionstrockners (1,2) an einer absperrbaren Ausblasöffnung (17) und der Saugseite des Gebläses (12) angeschlossen ist, an der ferner ein absperrbarer Saugeinlaß (18) für das frische gasförmige Medium (19)angeschlossen ist.

## Claims

1. Adsorption dryer regenerated under hot conditions for gaseous media with one or several adsorption chambers (1, 2) arranged in parallel which can be switched over from adsorption to regeneration and vice versa by means of a valve combination (3, 4), as well as with a blower (12) which, in a first section of the regeneration phase, passes a fresh gaseous medium (19) heated in a heater (7) which can be switched on and off to the adsorption chamber(s) (1, 2)
**characterised in that**
the blower (12) - with its pressure side via the heater (7) - and a closable suction inlet (8) for the fresh gaseous medium (9) are connected to the inlet of the adsorption chamber (1, 2) which, during the adsorption phase, serves as inlet for the medium to be dried and the outlet of the adsorption dryer (1, 2) is connected to a closable blow-out aperture (17) and the suction side of the blower (12) to which, moreover, a further closable suction inlet (18) is connected for the fresh gaseous medium (19).

## Revendications

1. Séchoir à adsorption régénéré à chaud pour des milieux gazeux comportant une ou plusieurs chambres d'adsorption parallèles (1, 2), qui peuvent être commutées de l'adsorption à la régénération et inversement à l'aide d'un ensemble combiné de vannes (3, 4), ainsi qu'un ventilateur (12), qui, pendant une première étape de la phase de régénération, envoie à la ou aux chambres d'adsorption (1, 2) un milieu gazeux frais (19) chauffé dans un réchauffeur pouvant être branché et débranché (7), **caractérisé en ce qu'**à l'admission de la chambre d'adsorption (1, 2), qui, dans la phase d'adsorption, sert d'entrée pour le milieu à sécher (5), sont raccordés le ventilateur (12) par son côté refoulement, par l'intermédiaire du réchauffeur (7), et une entrée d'aspiration (8), qui peut être bloquée, pour le milieu frais gazeux et que la sortie du séchoir à adsorption (1, 2) est raccordée à une ouverture de soufflage (17) pouvant être bloquée et le côté d'aspiration du ventilateur (12), auquel est en outre raccordée une entrée d'aspiration (18), qui peut être bloquée, pour le milieu frais gazeux (19).
